# EUROPEAN PATENT APPLICATION

(11) **EP 3 308 958 A2**
(43) Date of publication of application: **18.04.2018**
(21) Application number: 17196585.8
(22) Date of filing: 16.10.2017
(51) Int. Cl.: B32B 37/12, E04B 1/66

(54) **WATERPROOFING SYSTEM**

(30) Priority: 17.10.2016 NO 20161649
(71) Applicant: Litex AS, 3204 Sandefjord (NO)
(72) Inventor: RYKKELID, Per Ole, 3215 Sandefjord (NO)
(74) Representative: Onsagers AS

(57) **Abstract**

The present invention provides a waterproofing system for waterproofing a wet room surface, comprising a composite sheet (1) and a sealing tape, wherein the composite sheet (1) comprises two opposite edges (2), a first fastening layer (3), a second fastening layer (4) and a waterproof intermediate layer (5) having a first surface (6) and a second surface (7), wherein the first fastening layer (3) is arranged on and covers the whole first surface of the intermediate layer, while the second fastening layer (4) is arranged on a middle section of the second surface of the intermediate layer, such that the second surface of the intermediate layer features longitudinal surface sections (8), one longitudinal surface section along each of the opposite edges, that are not covered by the second fastening layer; and the sealing tape comprises an adhesive layer (13), a waterproof intermediate layer (14) and a fastening layer (15), the waterproof intermediate layer and the fastening layer is preferably in the same material as in the composite sheet (1) and the adhesive layer is protected by a peel layer (16) before use.

## Description

### Technical field

The present invention relates to the field of waterproofing surfaces, and more particularly to a composite sheet for waterproofing wet room surfaces and a method of waterproofing wet room surfaces by use of said composite sheet and a sealing tape.

### Background

The use of composite sheets comprising a waterproof layer in the waterproofing of surfaces, such as walls and floors in a wet room is well known in the prior art.

The prior art composite sheets feature a fastening layer on both surfaces of the waterproof layer to facilitate or allow for the gluing of the composite sheet to the surface to be waterproofed, and to provide a surface on which tiles and similar coverings may be fastened by for instance a cement-based tile adhesive. Such fastening layers are made up of a fibrous/porous material providing adhesion for a glue/adhesive used in adhering the composite sheet to a surface to be waterproofed and for providing adhesion for a glue/adhesive used for mounting for instance tiles to the surface of the composite sheet facing away from the surface to be waterproofed. The fastening layers are required since the waterproof layer, i.e. a polymer membrane or metal foil, have a smooth surface not suitable for adhering to the above-mentioned glue/adhesives.
In use, multiple adjacent composite sheets are glued to the surface to be waterproofed and the seams between the composite sheets are sealed. A common and relatively simple method of sealing the seams is the use of a sealing strip comprising a waterproof layer and fastening layers as in the composite sheet. The sealing strip is glued over the seam by using a glue/adhesive applied to the seam area before application of the sealing strip.
However, such sealing does not provide a completely waterproofed seal. Due to the capillary effect caused by the porous/fibrous fastening layer on each side of the seam, a small amount of water will reach the seam and the surface to be waterproofed. Further, the method is relatively time-consuming and prone to errors due to uneven or insufficient application of the glue/adhesive before applying the sealing strip.
The goal of the present invention is to provide a waterproofing system which avoids at least some of the disadvantages of the prior art.

### Summary of the invention

The present invention is defined by the appended claims and in the following:
In a first aspect, the present invention provides a waterproofing system for waterproofing a wet room surface, comprising a composite sheet and a sealing tape, wherein
   - the composite sheet comprises two opposite edges, a first fastening layer, a second fastening layer and a waterproof intermediate layer (i.e. a layer arranged between the first and the second fastening layer) having a first surface and a second surface, wherein the first fastening layer is arranged on and covers the whole first surface of the intermediate layer, while the second fastening layer is arranged on (and covers) a middle section of the second surface of the intermediate layer, such that the second surface of the intermediate layer features longitudinal surface sections, one longitudinal surface section along each of the opposite edges, that are not covered by the second fastening layer; and
   - the sealing tape comprises an adhesive layer, a waterproof intermediate layer and a fastening layer, the waterproof intermediate layer and the fastening layer is preferably in the same material as in the composite sheet and the adhesive layer is protected by a peel layer before use (i.e. the peel layer is removed from, or peeled off, the adhesive layer before application of the sealing tape).

The waterproofing system of the first aspect may also be termed a wet room, or wet room surface, waterproofing system.
In an embodiment of the waterproofing system, the longitudinal surface sections have a width within the range of 2 to 7 cm.
In an embodiment of the waterproofing system, the longitudinal surface sections are arranged along the whole length of the opposite edges.
In an embodiment of the waterproofing system, the waterproof intermediate layer comprises, or is, a waterproof polymer membrane or aluminium foil.
In an embodiment of the waterproofing system, the polymer membrane comprises, or is made in, any suitable polymeric material, including polypropylene, polyethylene and chlorinated polyethylene.
In an embodiment of the waterproofing system, the sealing tape have a width, such that most of the longitudinal surface sections forming the seam is covered by the sealing tape.

In an embodiment of the waterproofing system, the sealing tape has a width within the range of 1 and 2 times the width of the longitudinal surface section of the composite sheet, preferably within the range of 1.5 to 1.9 times the width of the longitudinal surface section.
In an embodiment of the waterproofing system, the adhesive layer comprises a butyl-based adhesive.
In a second aspect, the present invention provides a composite sheet for a waterproofing system according to the first aspect. The composite sheet comprises all of the features of the composite sheet of the first aspect and optionally any of the features of the embodiments of the first aspect.
In a third aspect, the present invention provides a sealing tape for a waterproofing system according to the first aspect. The sealing tape comprises all of the features of the sealing tape of the first aspect and optionally any of the features of the embodiments of the first aspect.
In a fourth aspect, the present invention provides a method of waterproofing a wet room surface using a waterproofing system according to the first aspect, comprising the steps of:
- gluing a first length of composite sheet onto the wet room surface, such that the second fastening layer faces away from the wet room surface;
- gluing a second length of composite sheet onto the wet room surface, such that the second fastening layer faces away from the wet room surface and one of the opposite edges of the second length of composite sheet is arranged adjacent to one of the opposite edges of the first length of composite sheet forming a seam between a longitudinal surface section of the first and the second length of composite sheet, respectively; and
- sealing the seam by applying the sealing tape.

The waterproofing system according to the first aspect is defined to comprise a composite sheet (i.e. the system may comprise only a single composite sheet) as it is customary to provide several meters (e.g. 10-30 m) of such sheets on rolls, and the two composite sheets required to form a seam between them, as defined by the method according to the fourth aspect, are normally obtained by dividing up the composite sheet supplied on the roll into suitable lengths of separate composite sheets. However, the waterproofing system may also be defined to comprise two composite sheets according to the first aspect and a sealing tape.
The composite sheet of the first and the second aspect is flexible, such that the sheet may be stored on a roll.

The composite sheet may also comprise additional layers arranged between the first fastening layer or the second fastening layer and the waterproof intermediate layer, provided the longitudinal surface sections of the second surface of the intermediate layer are unobstructed. Such additional layers may for instance be a strengthening layer, of for instance polyamide webbing of glass fiber, arranged between the first fastening layer and the first surface of the intermediate layer. A strengthening layer may be advantageous when the waterproof intermediate layer is an aluminium foil. The same applies to the sealing tape, wherein an additional layer may be arranged between the waterproof intermediate layer and the fastening layer.
The fastening layer of the composite sheet and the sealing tape is made in any suitable fibrous/porous material including woven and non-woven fabrics/felts of polyester, polypropylene and similar materials suitable for lamination to the waterproof intermediate layer of the composite sheet. Preferably, the fastening layers are made of a polypropylene felt/fleece.
The term "wet room surface" is in the present specification intended to mean any interior surface, e.g. walls and floors, of a room in need of waterproofing, such as any type of bathroom, swimming pool room, sauna and similar.
The term "waterproofing" is intended to mean making a surface impenetrable to water in both liquid and gaseous form.

### Short description of the drawings

Embodiments of the invention is described in detail by reference to the following drawings:
Fig. 1 is a schematic view of a composite sheet according to the invention.
Fig. 2 is a cross-sectional view of the composite sheet in fig. 1.
Figs. 3 and 4 are perspective views of a method, wherein the composite sheet in figs. 1 and 2 is used for waterproofing a wall.
Figs. 5 and 6 are cross-sectional views of the method in figs. 3 and 4.

### Detailed description of the invention

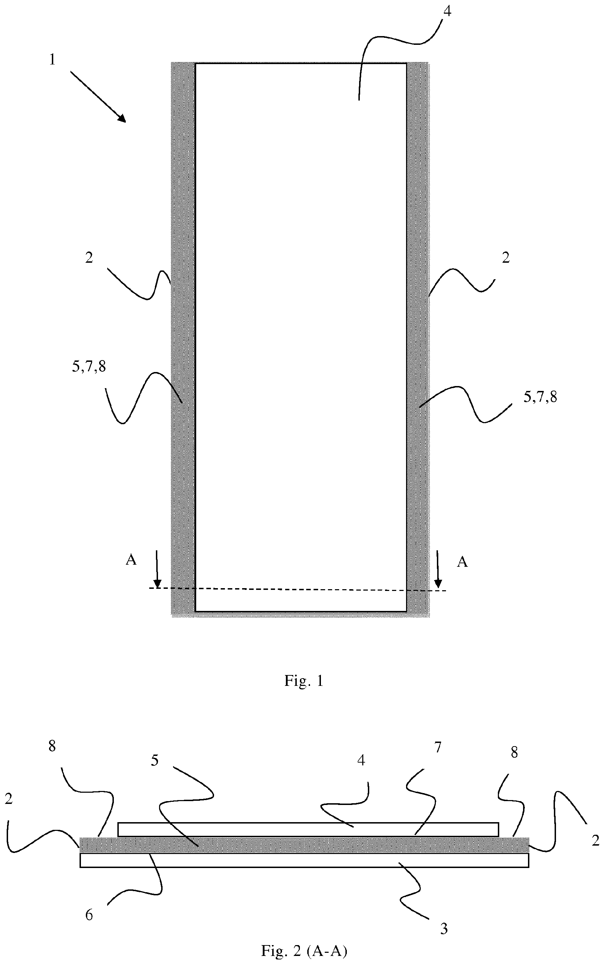

The present specification discloses a composite sheet suitable for waterproofing interior surfaces. A schematic drawing of an embodiment of a composite sheet according to the invention is shown in figs. 1 and 2. The drawings are scaled for illustrative purposes, in particular the thickness of the different layers.
The composite sheet comprises two opposite edges 2, a first fastening layer 3, a second fastening layer 4 and a waterproof intermediate layer 5.

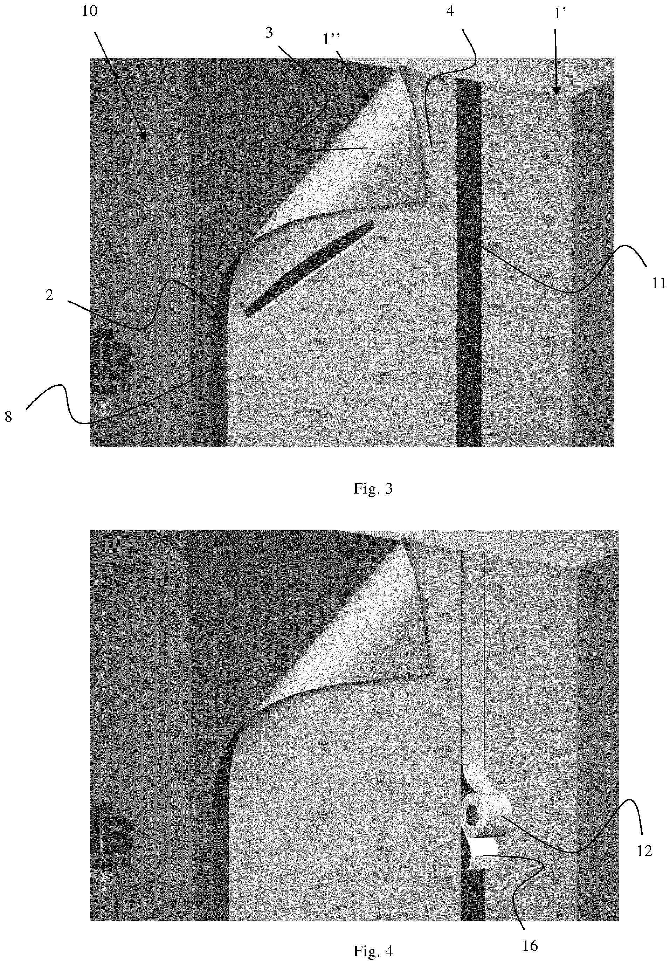

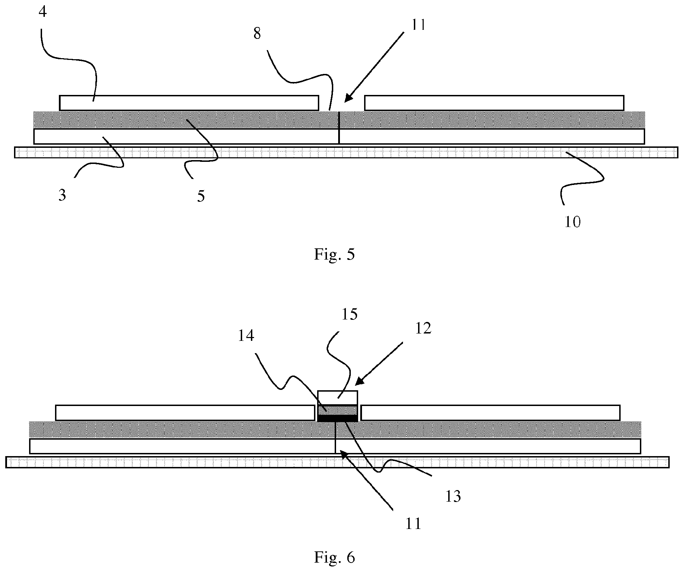

In the present embodiment, the waterproof intermediate layer 5 is a polyethylene-membrane and the fastening layers are made up of a polypropylene felt.
In other embodiments, the intermediate layer may be any suitable waterproof polymeric material membrane, including polypropylene, polyethylene and chlorinate polyethylene membranes or an aluminium foil, and the fastening layers may be any suitable fibrous/porous material, including woven and non-woven fabrics/felts of polyester, polypropylene and similar materials suitable for lamination to the waterproof intermediate layer of the composite sheet.
The waterproof intermediate layer features a first surface 6 and a second surface 7 to which the fastening layers are laminated. The composite sheet is flexible and is commonly provided on a roll, similar to a wallpaper. In this embodiment, the first fastening layer 3 covers the whole of the first surface 6 providing adhesion for a glue/adhesive used to adhere the composite sheet to a surface to be waterproofed. The second fastening layer 4 covers a middle section of the second surface 7, such that the second surface of the intermediate layer features longitudinal surface sections 8 that are not covered by the second fastening layer. The composite sheet features two longitudinal surface sections 8, one section arranged along each of the opposite edges 2. In the prior art, the composite sheets do not comprise such longitudinal surface sections, but have a second fastening layer that covers the whole second surface 7.
When used for waterproofing a surface, see figs. 3 and 4, in this case a wet room wall 10, multiple separate lengths of composite sheet is glued adjacent to each other on the wall via the first fastening layer 3, similar to the mounting of wallpaper. The edge 2 of one length of composite sheet 1' (i.e. a first composite sheet) is arranged adjacent to an edge 2 of a further length of composite sheet 1" (i.e. a second composite sheet), forming a seam 11 between them. The seam is a point of entry of water from the wet room to the wall and must be sealed in a waterproof manner. Due to the longitudinal surface sections 8 on each side of the seam, the seam may be sealed in a reproducible, simple and time-efficient manner by using a sealing tape 12 featuring a suitable adhesive layer. In this embodiment, the adhesive layer is a butyl-based adhesive able to provide adhesion to the second surface of the intermediate layer.
Cross-sectional schematic views of the waterproofing arrangement in figs. 3 and 4 are shown in figs 5 and 6. For illustrative purposes, the drawings are not to scale, in particular the thickness of the fastening layers 3,4, the intermediate waterproof layer 5 and the sealing tape 12. The sealing tape comprises an adhesive layer 13, a waterproof intermediate layer 14 and a fastening layer 15, the waterproof intermediate layer and the fastening layer are preferably in the same materials as used in the corresponding layers of the composite sheet and the adhesive layer is protected by a peel layer 16, see fig 4. The peel layer is removed as the sealing tape is applied to the seam 11. In this embodiment, the adhesive layer is a butyl-based adhesive. However, other suitable adhesives are also envisioned provided they ensure a waterproof and permanent adhesion between the second surface 7 of the intermediate waterproof layer 5 exposed at the longitudinal surface sections 8 of the composite sheet and the intermediate waterproof layer 14 of the sealing tape.

## Claims

1. A waterproofing system for waterproofing a wet room surface, comprising a composite sheet (1) and a sealing tape, wherein
- the composite sheet (1) comprises two opposite edges (2), a first fastening layer (3), a second fastening layer (4) and a waterproof intermediate layer (5) having a first surface (6) and a second surface (7), wherein the first fastening layer (3) is arranged on and covers the whole first surface of the intermediate layer, while the second fastening layer (4) is arranged on a middle section of the second surface of the intermediate layer, such that the second surface of the intermediate layer features longitudinal surface sections (8), one longitudinal surface section along each of the opposite edges, that are not covered by the second fastening layer; and
- the sealing tape comprises an adhesive layer (13), a waterproof intermediate layer (14) and a fastening layer (15), the waterproof intermediate layer and the fastening layer is preferably in the same material as in the composite sheet (1) and the adhesive layer is protected by a peel layer (16) before use.

2. A waterproofing system according to claim 1, wherein the longitudinal surface sections (8) have a width within the range of 2 to 7 cm.

3. A waterproofing system according to any of the preceding claims, wherein the longitudinal surface sections are arranged along the whole length of the opposite edges.

4. A waterproofing system according to any of the preceding claims, wherein the waterproof intermediate layer comprises a waterproof polymer membrane or aluminium foil.

5. A waterproofing system according to claim 4, wherein the polymer membrane comprises any suitable polymeric material, including polypropylene, polyethylene and chlorinated polyethylene.

6. A waterproofing system according to any of the preceding claims, wherein the sealing tape (12) have a width, such that most of the longitudinal surface sections (8) forming the seam (11) is covered by the sealing tape.

7. A waterproofing system according to any of the preceding claims, wherein the sealing tape (12) has a width within the range of 1 and 2 times the width of the longitudinal surface section (8) of the composite sheet.

8. A waterproofing system according to any of the preceding claims, wherein the adhesive layer comprises a butyl-based adhesive.

9. A composite sheet for a waterproofing system according to any of the preceding claims.

10. A sealing tape for a waterproofing system according to any of claims 1-8.

11. A method of waterproofing a wet room surface (10) using a waterproofing system according to any of claims 1-8, comprising the steps of:
- gluing a first length of composite sheet (1') onto the wet room surface (10), such that the second fastening layer (4) faces away from the wet room surface;
- gluing a second length of composite sheet (1") onto the wet room surface (10), such that the second fastening layer (4) faces away from the wet room surface and one of the opposite edges (2) of the second length of composite sheet (1") is arranged adjacent to one of the opposite edges (2) of the first length of composite sheet (1') forming a seam (11) between a longitudinal surface section (8) of the first and the second length of composite sheet, respectively; and
- sealing the seam (11) by applying the sealing tape (12).
